# EUROPEAN PATENT APPLICATION

(11) **EP 4 609 696 A1**
(43) Date of publication of application: **03.09.2025**
(21) Application number: 24182017.4
(22) Date of filing: 13.06.2024
(51) Int. Cl.: A01D 46/26, A01D 46/00

(54) **OLIVE HARVESTER**

(30) Priority: 27.02.2024 CN 202410175372
(71) Applicant: Zhejiang N Plus Intelligent Technology Co., Ltd, Lishui Zhejiang (CN)
(72) Inventor: LV, Zhouan, Lishui (CN); ZHU, Zhengtao, Lishui (CN); FENG, Guangqing, Lishui (CN)
(74) Representative: Metida

(57) **Abstract**

Disclosed is an olive harvester, wherein a gearbox is used to individually install a drive component, facilitating the separation of the drive component from a connector housing; and subsequently, a movable frame is movably connected to the connector housing through a bearing by swing axles, and also connected with the swing axles through swivel lockout screws, which facilitates the disassembly and assembly of the movable frame with the connector housing, thus achieving the detachable connection of main components of the olive harvester, facilitating maintenance and replacement during equipment faults, and shortening maintenance time. Furthermore, in terms of a force transmission structure, force is transmitted through a linkage structure, ensuring stable transmission and improving force transmission efficiency, and meanwhile, the structural optimization of moving parts in terms of design eliminates jamming with branches, resolving the problem of traditional equipment prone to malfunction and low olive picking efficiency during operation.

## Description

### TECHNICAL FIELD

The present invention relates to the technical field of olive picking, in particular to an olive harvester.

### BACKGROUND ART

Olive is magaphanerophytes of Genus Canarium, Family Burseraceae, belonging to the Oleaceae family, characterized by its small leaves and leathery that are elliptic-lanceolate in shape and have short petioles; the flowers are small, bisexual or unisexual, with cup-shaped calyxes and white or greenish white petals, and a distinct floral disk; and the fruit is ovoid-fusiform in shape. The olive tree has a flowering period from May to July and a fruiting period from August to November. The olive tree, deriving its appellation from the fruits it bears, offers a delectable fare when consumed in its verdant youth. During the harvesting season, the separation of the fruits from branches necessitates a meticulous procedure involving the percussive separation of the kernels through the adept beating of the branches.

In the prior art, the Chinese invention (publication number: CN217826012U) has disclosed a drive structure of an olive harvester that achieves swing based on a rack and the olive harvester thereof. The olive harvester includes a housing, a push rod movably connected to a front end of the housing, a power component that is installed inside the housing and drives the push rod to make reciprocating movement in the forward and backward direction, racks arranged on a front end of the push rod, and a swinging arm hinged in front of the housing. The swinging arm is equipped with a striking component for striking fruits, and one end of the swinging arm corresponds to the rack; a sector gear is arranged at an end of the corresponding rack of the swinging arm, centers of circles corresponding to teeth of the sector gear correspond to a center of a circle where the swinging arm is hinged to the housing, and the sector gear meshes with the rack; an articulated joint between the swinging arm connected with the striking component and the housing is achieved through a traditional articulation manner, and at its end, power is provided through the meshing of the sector gears and the racks. This allows the traditional articulated joint used to supply the swinging arm for swinging to be replaced.

In the aforementioned technical solution, the power component drives the swinging arm to swing, which requires the cooperation of multiple parts such as the push rod, connectors, and the sector gears. This may lead to an increased probability of equipment faults. Additionally, the sector gears and the racks on the connectors are exposed on the outside of the housing. When the device is used for picking nut fruits, the housing and the striking component need to be inserted into branches. The swinging arm, located between upper and lower housings, may easily get stuck, which may cause internal circuit faults in the power motor. The structural design of the solution is inappropriate, as it necessitates maintaining the stability of the push rod during its telescopic movement. This inevitably leads to increased wear between the push rod and an axle sleeve, resulting in a shortened lifespan of the device. It cannot meet the needs of large-scale olive picking, leading to increased cost expenses and reduction in the efficiency of nut fruit picking.

### SUMMARY OF THE INVENTION

The object of the present invention is to provide an olive harvester that utilizes a drive component as a power source, then employs a support axle on a rotating gear to drive two sets of articulated rods to swing, and finally, through the transmission cooperation of reciprocating swinging arms and swing axles, enables a movable frame to swing on both sides of a connector housing. This design reduces the number of components and parts in the force transmission process, thereby minimizing the probability of equipment faults. Additionally, each component may be individually disassembled for easy replacement in the event of faults. The movable frame is arranged outside the connector housing to reduce the risk of jamming, and ensure the olive harvester may operate stably and durably during the beating of fruits, thus solving the problems presented in the prior art.
To fulfill the above objective, the present invention adopts the following technical solution: The olive harvester includes a connector housing and a movable frame disposed on one side of the connector housing, the movable frame is located on both sides of the connector housing with the connector housing serving as an axis of symmetry, and swing axles are installed on a top of the movable frame and is movably installed on the connector housing; and reciprocating swinging arms are fixed to outer sides of the swing axles;
A gearbox, fixedly installed inside the connector housing;
A drive component, installed on the gearbox for deflecting the reciprocating swinging arms to facilitate a reciprocating swinging of the movable frame;
Beating bars, detachably installed on the movable frame for beating nut fruits;
A connecting rod and a circuit control grab handle installed on one end of the connecting rod, wherein one end, away from the circuit control grab handle, of the connecting rod is fixedly connected with the connector housing.

Preferably, the drive component includes a drive motor fixed to a bottom of the gearbox, an output axle of the drive motor runs through the gearbox and is fixed with a drive gear, a revolving axle is rotationally connected to the gearbox by a bearing, two ends of the revolving axle respectively extend to upper and lower sides of the gearbox, a revolving gear is integrally formed on one end of the revolving axle, the revolving gear and the drive gear are located on the same horizontal plane and are meshed with each other, a transition gear is fixed to one end, away from the revolving gear, of the revolving axle, a rotary gear is rotationally connected to one side, away from the revolving gear, of the gearbox by a pivot, the rotary gear and the transition gear are located on the same horizontal plane and are meshed with each other, a support axle is fixed to one side, away from the gearbox, of the rotary gear, an outer side of the support axle is rotationally connected with an articulated rod by the bearing, the articulated rod runs through an outer side of a connector and is movably connected with free ends of the reciprocating swinging arms.

Preferably, the connector housing consists of two sets of movable shells, the two sets of shells are connected fixedly through stay bolts, four sets of mounting feet are arranged around the gearbox, the mounting feet are in threaded connection with one set of shells through mounting screws, and space of the drive motor and the revolving gear is reserved between the gearbox and the shells.

Preferably, the swing axles are installed inside the connector housing by a bearing, upper lock screws are arranged above the connector housing, the upper lock screws and the connector housing are in threaded connection with one end of the swing axle, swivel lockout screws are arranged at a bottom of the movable frame, the swivel lockout screws run through the movable frame and are in threaded connection with ends of the swing axles, and washers sleeve the swing axles, and are located between the connector housing and the reciprocating swinging arms.

Preferably, the support axle does not coincide with a central axis of the rotary gear, and the pivot is located in a center of the rotary gear.

Preferably, a fixing pin is movably arranged at one end, away from the corresponding swing axle, of the corresponding reciprocating swinging arm, and the fixing pin runs through the articulated rod and is clamped with a hoop.

Preferably, a connecting end portion is arranged on one end of each of the beating bars, four sets of run-through holes are formed in an outer side of the movable frame along the direction of the connecting rod, the connecting end portions are located in the run-through holes, fastening bolts are arranged on one end, away from the beating bars, of the movable frame, the fastening bolts run through inner cavities of the run-through holes and are in threaded connection with the connecting end portions, inner cavities of the connecting end portions are filled with flexible rubber wrapped on ends of the beating bars, run-through grooves are formed in surfaces of the connecting end portions, and the flexible rubber extends outwards along the run-through grooves.

Preferably, a radius of the revolving gear is larger than that of the transition gear, a protective cover for protecting the transition gear is arranged on an outer side of the gearbox, and a gap by which the transition gear is conveniently meshed with the rotary gear is formed on one side of the protective cover.

Preferably, a circuit board connected with the drive motor by a circuit is arranged inside the circuit control grab handle, a control button which is electrically connected with the circuit board and may control the drive motor is arranged on an outer side of the circuit control grab handle, and an external power cable which is electrically connected with the circuit board is arranged on the outer side of the circuit control grab handle.

Preferably, the adjacent beating bars on the same movable frame are arranged in an upper-and-lower staggered and inclined manner, with four sets of beating bars expanding outwards as a whole in a fan-shaped configuration.

Compared with prior art, the present invention has the advantages effects that:
1, According to the present invention, the drive component is independently installed through the gearbox, which facilitates the separation of the drive component from the connector housing; and subsequently, the movable frame is movably connected with the connector housing through the bearing by the swing axles, and also connected with the swing axles through the swivel lockout screws, which facilitates the disassembly and assembly of the movable frame with the connector housing, thus achieving the detachable connection of the main components of the olive harvester, facilitating maintenance and replacement during equipment faults, and shortening maintenance time. Furthermore, in terms of the force transmission structure, force is transmitted through the linkage structure, ensuring stable transmission and improving force transmission efficiency, and meanwhile, the structural optimization of the moving parts in terms of design eliminates jamming with branches, resolving the problem of traditional equipment prone to malfunction and low olive picking efficiency during operation.
2, According to the present invention, with the structures and arrangements of the movable frame and the beating bars, when the movable frame is driven on the reciprocating swinging arms and the articulated rod, the beating range is expanded and the picking efficiency of nut fruits.

### BRIEF DESCRIPTION OF THE DRAWINGS

FIG. 1 is a stereochemical schematic diagram according to the present invention;
FIG. 2 is a structural top view according to the present invention;
FIG. 3 is a stereochemical schematic diagram showing a connector housing and a movable frame according to the present invention;
FIG. 4 is a local stereochemical schematic diagram according to the present invention;
FIG. 5 is a stereochemical schematic diagram showing a gearbox and a movable frame according to the present invention;
FIG. 6 is a stereochemical schematic diagram showing a drive component according to the present invention;
FIG. 7 is an enlarged view of Zone A in FIG. 4;
FIG. 8 is a stereochemical section view showing a connector housing according to the present invention; and
FIG. 9 is a split stereochemical schematic diagram showing a connecting end portion and a beating bar according to the present invention;

Reference signs in the drawing: 1. Connector housing; 2. Movable frame; 3. Swing axle; 4. Reciprocating swinging arm; 5. Gearbox; 6. Drive component; 61. Drive motor; 62. Drive gear; 63. Revolving axle; 64. Revolving gear; 65. Transition gear; 66. Rotary gear; 67. Support axle; 68. Articulated rod; 7. Beating bar; 8. Connecting rod; 9. Circuit control grab handle; 10. Mounting foot; 11. Mounting screw; 12. swivel lockout screw; 13. Upper lock screw; 14. Fixing pin; 15. Hoop; 16. Connecting end portion; 17. Fastening bolt; 18. Protective cover; 19. Gap; 20. Control button; 21. External power cable; 22. Epoxy resin bonding agent; 23. Flexible glue; 24. Run-through groove.

### DETAILED DESCRIPTION OF EMBODIMENTS

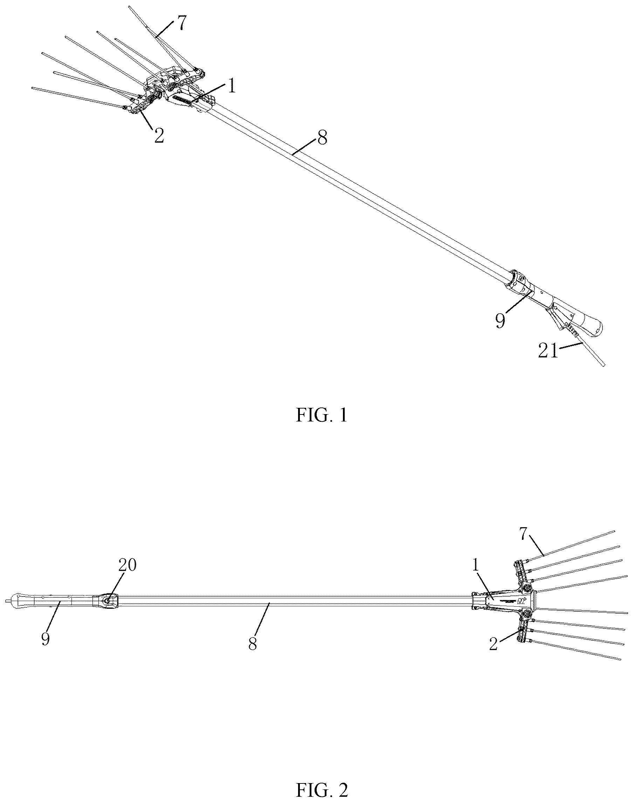

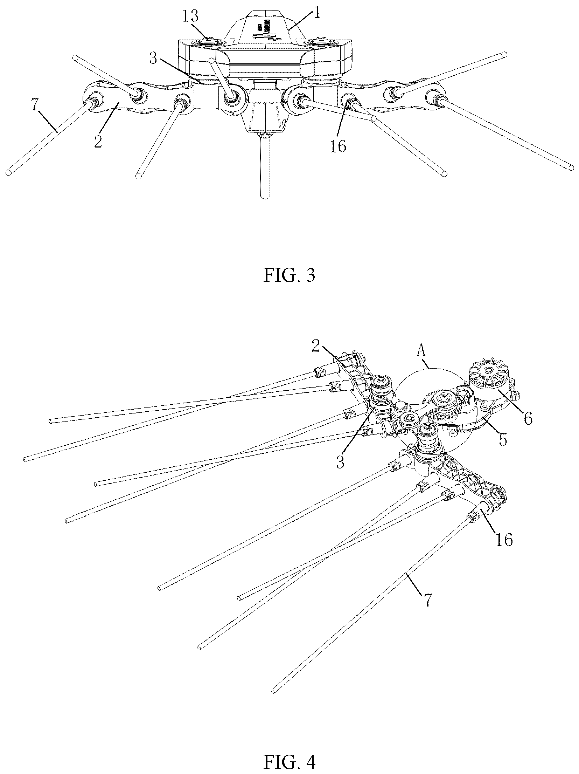

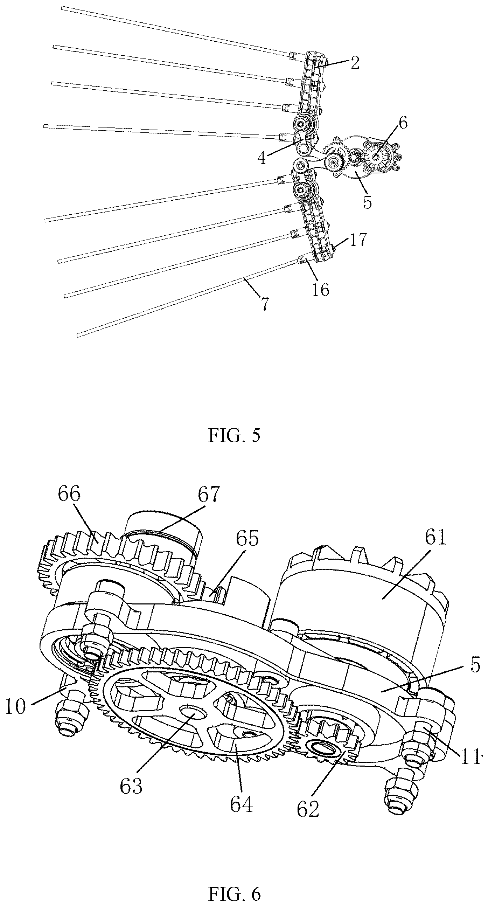

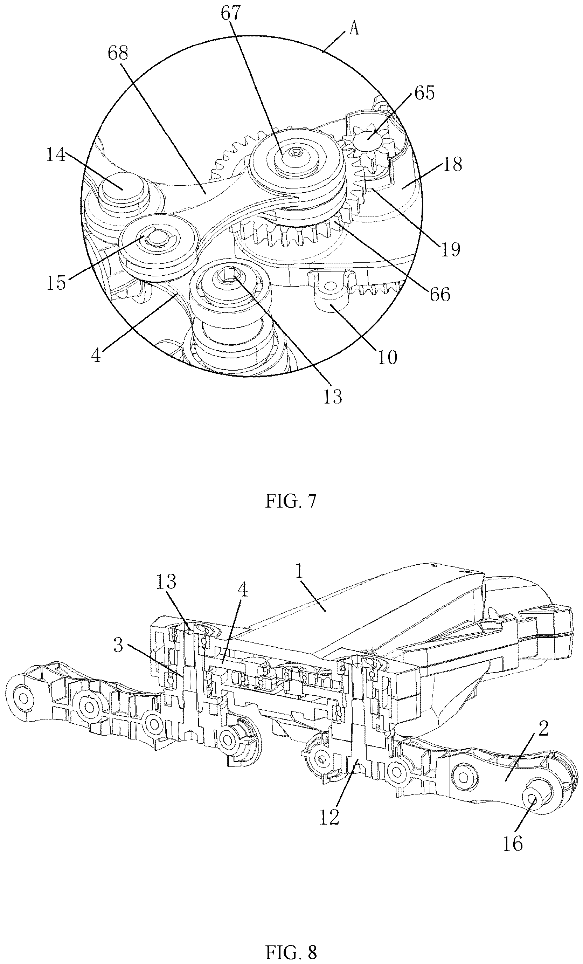

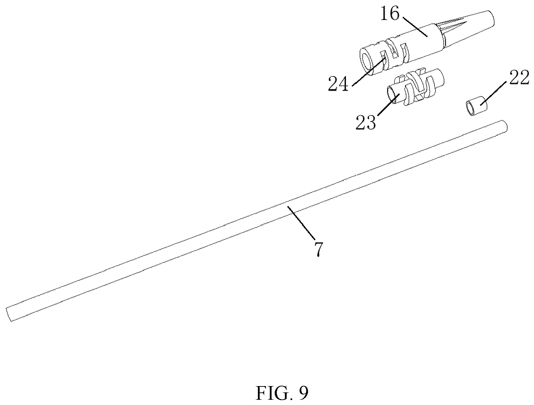

The technical solutions in the embodiments of the present invention will be clearly and completely described with reference to the accompanying drawings in the embodiments of the present invention below, and obviously, the described embodiments are part, not all of embodiments of the present invention. Based on the embodiments in the present invention, all other embodiments obtained by those ordinarily skilled in the art without involving inventive efforts should fall within the protection scope of the present invention.
The present invention provides an olive harvester as shown in FIGS. 1-9, which includes a connector housing 1 and a movable frame 2 disposed on one side of the connector housing 1, the movable frame 2 is located on both sides of the connector housing 1 with the connector housing 1 serving as an axis of symmetry, and swing axles 3 are installed on a top of the movable frame 2 and are movably installed on the connector housing 1; and reciprocating swinging arms 4 are fixed to outer sides of the swing axles 3;
A gearbox 5, fixedly installed inside the connector housing 1;
A drive component 6, installed on the gearbox 5 for deflecting the reciprocating swinging arms 4 to facilitate the reciprocating swinging of the movable frame 2;
beating bars 7, detachably installed on the movable frame 2 for beating nut fruits;
A connecting rod 8 and a circuit control grab handle 9 installed on one end of the connecting rod 8, wherein one end, away from the circuit control grab handle 9, of the connecting rod 8 is fixedly connected with the connector housing 1.

The drive component 6 is independently installed through the gearbox 5, which facilitates the separation of the drive component 6 from the connector housing 1; and subsequently, the movable frame 2 is movably connected with the connector housing 1 through the bearing by the swing axles 3, and also connected with the swing axles 3 through the swivel lockout screws 12, which facilitates the disassembly and assembly of the movable frame 2 with the connector housing 1, thus achieving the detachable connection of the main components of the olive harvester, facilitating maintenance and replacement during equipment faults, and shortening maintenance time. Furthermore, in terms of the force transmission structure, force is transmitted through the linkage structure, ensuring stable transmission and improving force transmission efficiency, and meanwhile, the structural optimization of the moving parts in terms of design eliminates jamming with branches, resolving the problem of traditional equipment prone to malfunction and low olive picking efficiency during operation.

The drive component 6 includes a drive motor 61 fixed to a bottom of the gearbox 5, an output axle of the drive motor 61 runs through the gearbox 5 and is fixed with a drive gear 62, a revolving axle 63 is rotationally connected to the gearbox 5 by a bearing, two ends of the revolving axle 63 respectively extend to upper and lower sides of the gearbox 5, a revolving gear 64 is integrally formed on one end of the revolving axle 63, the revolving gear 64 and the drive gear 62 are located on the same horizontal plane and are meshed with each other, a transition gear 65 is fixed to one end, away from the revolving gear 64, of the revolving axle 63, a rotary gear 66 is rotationally connected to one side, away from the revolving gear 64, of the gearbox 5 by a pivot, the rotary gear 66 and the transition gear 65 are located on the same horizontal plane and are meshed with each other, the radius of the revolving gear 64 is greater than that of the transition gear 65, and through the cooperation of the revolving gear 64 and the transition gear 65, it is convenient to slow down the revolving speed of the drive gear 62, avoiding the direct driving of the drive motor 61 on the reciprocating swinging arms 4 at high revolving speed, which may cause the movable frame 2 to rapidly swing under the cooperation of the swing axles 3, increase the wear rate of the swing axles 3, while at the same time, the beating bars 7 may not be able to pick nut fruits more effectively and quickly at high deflection speed, which may lead to damage to the nut fruits and fruit trees, and increase the risk of entanglement of the beating bars 7 with branches, resulting in jamming. Through the cooperation of the revolving gear 64 and the transition gear 65, the rotary gear 66 may be maintained at an appropriate revolving speed to slow down equipment wear and improve equipment efficiency in fruit picking. A support axle 67 is fixed to one side, away from the gearbox 5, of the rotary gear 66, an outer side of the support axle 67 is rotationally connected with an articulated rod 68 by the bearing, the articulated rod 68 runs through an outer side of a connector and is movably connected with free ends of the reciprocating swinging arms 4.

The connector housing 1 consists of two sets of movable shells, the gearbox 5 is located inside the two sets of shells, the two sets of shells are connected fixedly through stay bolts, four sets of mounting feet 10 are arranged around the gearbox 5, the mounting feet 10 are in threaded connection with one set of shells through mounting screws 11, and space of the drive motor 61 and the revolving gear 64 is reserved between the gearbox 5 and the shells to prevent the drive gear 62, the revolving gear 64 and the rotary gear 66 from colliding with the shells during rotation, and meanwhile, safety space is reserved, which may prevent the branches from jamming the gear structure directly after being inserted into the connector housing 1.

The swing axles 3 are installed inside the connector housing 1 by a bearing, upper lock screws 13 are arranged above the connector housing 1, the upper lock screws 13 and the connector housing 1 are in threaded connection with one end of the swing axle 3, swivel lockout screws 12 are arranged at a bottom of the movable frame 2, the swivel lockout screws 12 run through the movable frame 2 and are in threaded connection with end of the swing axles 3, and washers sleeve the swing axles 3, and are located between the connector housing 1 and the reciprocating swinging arms 4. The swing axles 3 may be connected with the connector housing 1 by the upper lock screws 13, and meanwhile, the swivel lockout screws 12 locks the movable frame 2 and the swing axles 3, which facilitates the synchronous rotation of the swing axles 3 and the movable frame 2.

The support axle 67 does not coincide with a central axis of the rotary gear 66, and the pivot is located in a center of the rotary gear 66. By adjusting the position of the support axle 67, it is possible to achieve the eccentric rotation of the support axle 67 on the rotary gear 66, which in turn drives the articulated rod 68 to perform reciprocating motion for providing motive force for the deflection of moving parts. Furthermore, the articulated rod 68 may also reduce the size of the connector housing 1 and external connection space, preventing branches from being inserted into the connector housing 1 during operation, thereby reducing mechanical faults.

A fixing pin 14 is movably arranged at one end, away from the corresponding swing axle 3, of the corresponding reciprocating swinging arm 4, and the fixing pin 14 runs through the articulated rod 68 and is clamped with a hoop 15. Through the arrangement of the fixing pin 14 and the hoop 15, the reciprocating swinging arms 4 and the articulated rod 68 may be disassembled and assembled conveniently and quickly, so that the device is convenient to repair.

A connecting end portion 16 is arranged on one end of each of the beating bars 7, four sets of run-through holes are formed in an outer side of the movable frame 2 along the direction of the connecting rod 8, the connecting end portions 16 are located in the run-through holes, fastening bolts 17 are arranged on one end, away from the beating bars 7, of the movable frame 2, the fastening bolts 17 run through inner cavities of the run-through holes and are in threaded connection with the connecting end portions 16, inner cavities of the connecting end portions 16 are filled with flexible rubber 23 wrapped on ends of the beating bars 7, run-through grooves 24 are formed in surfaces of the connecting end portions 16, the flexible rubber 23 extend outwards along the run-through grooves 24, and rubber pads are arranged on the outer sides of the connecting end portions 16, which are in fit with the run-through holes to protect the beating bars 7. Meanwhile, the soft rubber 23 inside the connecting end portions 16 enhances the shock resistance and buffering capacity between the beating bars 7 and the connecting end portions 16, preventing the frequent contact of the beating bars 7 with the movable frame 2, resulting in wear and breakage, while achieving shock-absorbent and shockproof effects. Through the cooperation of the fastening bolts 17 and the connecting end portions 16, it is convenient to install the beating bars 7 on the movable frame 2, and the beating bars 7 may be quickly replaced in case of damage, avoiding prolonged replacement time of the beating bars 7 that may result in reduced harvesting efficiency.

A protective cover 18 for protecting the transition gear 65 is arranged on an outer side of the gearbox 5, and a gap 19 by which the transition gear 65 is conveniently meshed with the rotary gear 66 is formed on one side of the protective cover 18; and through the arrangement of the protective cover 18, the transition gear 65 may be protected to prevent branches from being clamped by the transition 65 and the rotary gear 66 after being inserted into the connector housing 1, resulting in the seizing of the gear structure.

A circuit board connected with the drive motor 61 by a circuit is arranged inside the circuit control grab handle 9, a control button 20 which is electrically connected with the circuit board and may control the drive motor 61 is arranged on an outer side of the circuit control grab handle 9, and an external power cable 21 which is electrically connected with the circuit board is arranged on the outer side of the circuit control grab handle 9; and the drive motor 61 is controlled to be shut on and down under the cooperation of the control button 20 and the circuit board, which facilitates a user to harvest the nut fruits on the tree using the connecting rod 8 through the device.

The adjacent beating bars 7 on the same movable frame 2 are arranged in an upper-and-lower staggered and inclined manner, with four sets of beating bars 7 expanding outwards as a whole in a fan-shaped configuration. By making the arrangement of the beating bars 7, not only can the space covered by the beating bars 7 be increased, the upper and lower striking areas can be increased, and more fruits can be knocked down during a single swing. Meanwhile, the overall distribution of the beating bars 7 in a fan shape facilitates the increase of the covered area of the beating bars 7 in the outward direction.

Specifically, during use, the user holds the circuit control grab handle 9 and moves the movable frame 2 and the beating bars 7 into the nut fruit branches using the connector housing 1. By pressing the control button 20, the drive motor 61 is started, the drive motor 61 drives the drive gear 62 to rotate, the drive gear 62 then drives the revolving gear 64 to rotate, and the revolving gear 64 drives the transition gear 65 to rotate by the revolving axle 63 synchronously. Under the slowdown of the revolving gear 64 and the transition gear 65, the rotary gear 66 is driven by the transition gear 65 to rotate. The rotation center of the rotary gear 66 is offset from the rotation center of the support axle 67, causing the support axle 67 to rotate on the rotary gear 66, the support axle 67 then drives the articulated rod 68 to rotate, while the articulated rod 68 drives the movable frame 2 to swing and pivot around the swing axles 3 under the restraint of the reciprocating swing arms 4, and meanwhile, the movable frame 2 reciprocates in a swinging motion to drive the beating bars 7 to beat against the nut fruits on the branches, so that the fruits fall off from the branches.

Although the embodiments of the present invention have been shown and described, various changes, modifications, replacements and variations can be made to these embodiments by those ordinarily skilled in the art without departing from the principle and spirit of the present invention, and the scope of the present disclosure is defined by accompanying claims and equivalents thereof.

## Claims

1. The olive harvester, comprising a connector housing (1) and a movable frame (2) disposed on one side of the connector housing (1), **characterized in that** the movable frame (2) is located on both sides of the connector housing (1) with the connector housing (1) serving as an axis of symmetry, and swing axles (3) are installed on a top of the movable frame (2) and are movably installed on the connector housing (1); and reciprocating swinging arms (4) are fixed to outer sides of the swing axles (3);
a gearbox (5), fixedly installed inside the connector housing (1);
a drive component (6), installed on the gearbox (5) for deflecting the reciprocating swinging arms (4) to facilitate a reciprocating swinging of the movable frame (2);
beating bars (7), detachably installed on the movable frame (2) for beating nut fruits;
a connecting rod (8) and a circuit control grab handle (9) installed on one end of the connecting rod (8), wherein one end, away from the circuit control grab handle (9), of the connecting rod (8) is fixedly connected with the connector housing (1).

2. The olive harvester according to claim 1, **characterized in that** the drive component (6) comprises a drive motor (61) fixed to a bottom of the gearbox (5), an output axle of the drive motor (61) runs through the gearbox (5) and is fixed with a drive gear (62), a revolving axle (63) is rotationally connected to the gearbox (5) by a bearing, two ends of the revolving axle (63) respectively extend to upper and lower sides of the gearbox (5), a revolving gear (64) is integrally formed on one end of the revolving axle (63), the revolving gear (64) and the drive gear (62) are located on the same horizontal plane and are meshed with each other, a transition gear (65) is fixed to one end, away from the revolving gear (64), of the revolving axle (63), a rotary gear (66) is rotationally connected to one side, away from the revolving gear (64), of the gearbox (5) by a pivot, the rotary gear (66) and the transition gear (65) are located on the same horizontal plane and are meshed with each other, a support axle (67) is fixed to one side, away from the gearbox (5), of the rotary gear (66), an outer side of the support axle (67) is rotationally connected with an articulated rod (68) by the bearing, the articulated rod (68) runs through an outer side of a connector and is movably connected with free ends of the reciprocating swinging arms (4).

3. The olive harvester according to claim 1, **characterized in that** the connector housing (1) consists of two sets of movable shells, the two sets of shells are connected fixedly through stay bolts, four sets of mounting feet (10) are arranged around the gearbox (5), the mounting feet (10) are in threaded connection with one set of shells through mounting screws (11), and space of the drive motor (61) and the revolving gear (64) is reserved between the gearbox (5) and the shells.

4. The olive harvester according to claim 1, **characterized in that** the swing axles (3) are installed inside the connector housing (1) by a bearing, upper lock screws (13) are arranged above the connector housing (1), the upper lock screws (13) and the connector housing (1) are in threaded connection with one end of the swing axle (3), swivel lockout screws (12) are arranged at a bottom of the movable frame (2), the swivel lockout screws (12) run through the movable frame (2) and are in threaded connection with ends of the swing axles (3), and washers sleeve the swing axles (3), and are located between the connector housing (1) and the reciprocating swinging arms (4).

5. The olive harvester according to claim 2, **characterized in that** the support axle (67) does not coincide with a central axis of the rotary gear (66), and the pivot is located in a center of the rotary gear (66).

6. The olive harvester according to claim 1, **characterized in that** a fixing pin (14) is movably arranged at one end, away from the corresponding swing axle (3), of the corresponding reciprocating swinging arm (4), and the fixing pin (14) runs through the articulated rod (68) and is clamped with a hoop (15).

7. The olive harvester according to claim 1, **characterized in that** a connecting end portion (16) is arranged on one end of each of the beating bars (7), four sets of run-through holes are formed in an outer side of the movable frame (2) along the direction of the connecting rod (8), the connecting end portions (16) are located in the run-through holes, fastening bolts (17) are arranged on one end, away from the beating bars (7), of the movable frame (2), the fastening bolts (17) run through inner cavities of the run-through holes and are in threaded connection with the connecting end portions (16), inner cavities of the connecting end portions (16) are filled with flexible rubber (23) wrapped on ends of the beating bars (7), run-through grooves (24) are formed in surfaces of the connecting end portions (16), and the flexible rubber (23) extends outwards along the run-through grooves (24).

8. The olive harvester according to claim 2, **characterized in that** a radius of the revolving gear (64) is larger than that of the transition gear (65), a protective cover (18) for protecting the transition gear (65) is arranged on an outer side of the gearbox (5), and a gap (19) by which the transition gear (65) is conveniently meshed with the rotary gear (66) is formed on one side of the protective cover (18).

9. The olive harvester according to claim 1, **characterized in that** a circuit board connected with the drive motor (61) by a circuit is arranged inside the circuit control grab handle (9), a control button (20) which is electrically connected with the circuit board and may control the drive motor (61) is arranged on an outer side of the circuit control grab handle (9), and an external power cable (21) which is electrically connected with the circuit board is arranged on the outer side of the circuit control grab handle (9).

10. The olive harvester according to claim 1, **characterized in that** the adjacent beating bars (7) on the same movable frame (2) are arranged in an upper-and-lower staggered and inclined manner, with four sets of beating bars (7) expanding outwards as a whole in a fan-shaped configuration.
